# EUROPÄISCHE PATENTANMELDUNG

(11) **EP 2 450 597 A1**
(43) Veröffentlichungstag der Anmeldung: **09.05.2012**
(21) Anmeldenummer: 10190484.5
(22) Anmeldetag: 09.11.2010
(51) Int. Cl.: F16H 3/00, F16H 37/06, F16H 61/688, B60K 6/442

(54) **Erfindung betreffend elektrischen Antrieb**

(71) Anmelder: Technische Universität Darmstadt, 64283 Darmstadt (DE)
(72) Erfinder: Prof. Dr. Rinderknecht, Stephan, 72810, Gomaringen (DE); Dipl.-Ing. Meier, Torben, 65346, Eltville (DE)
(74) Vertreter: Stumpf, Peter

(57) **Zusammenfassung**

Ein neuer elektrischer Antrieb sowie ein Verfahren zur Steuerung des Antriebes, so dass ein Getriebestufenwechsel mit übergangslosem Verlauf des Drehmomentes an der Ausgangswelle (AW) bei rein elektrischen oder maßgeblich elektrischen Antrieben ermöglicht wird.

## Beschreibung

### Erfindung betreffend elektrischen Antrieb

Die vorliegende Erfindung betrifft einen neuen elektrischen Antrieb sowie ein Verfahren zur Steuerung des Antriebes, so dass ein Getriebestufenwechsel mit übergangslosem Verlauf des Drehmomentes an der Ausgangswelle bei rein elektrischen oder maßgeblich elektrischen Antrieben ermöglicht wird. Diese Erfindung kann u.a. für den elektrischen Antrieb eines Fahrzeuges verwendet werden um einen zugkraftunterbrechungsfreien Gangwechsel zu ermöglichen.

### Beschreibung

### Stand der Technik

Im Stand der Technik sind bislang keine Schriften bekannt, welche einen solchen elektrischen Antrieb mit übergangslosem Verlauf des Drehmomentes während einem Getriebestufenwechsel beschreiben.

Aus dem Stand der Technik ist der Getrag Boosted Range Extender (http://www.heise.de/autos/artikel/Boosted-Range-Extender-drei-Antriebe-in-einem-881580.html) bekannt. Während beim Boosted Range Extender nur eine E-Maschine maßgeblich zum Antrieb der Räder vorgesehen ist, dienen bei der hier beschriebenen Erfindung mindestens zwei verwendeten E-Maschinen dem Antrieb. Das Getriebe ist an einem AMT (Automated Manual Transmission) orientiert, das heißt, es handelt sich in der Ausführung um einen Stirnradsatz in Vorgelegebauweise bei dem Getriebestufenwechsel mit Schaltelementen ausgeführt werden, die keine Lastschaltung erlauben. Demgegenüber basiert der Getrag Boosted Range Extender auf einem Planetenradsatz mit volllastschaltbaren reibschlüssigen Kupplungen.

### Aufgabe

Es ist Aufgabe der Erfindung einen elektrischen Antrieb mit übergangslosem Verlauf des Drehmomentes an der Ausgangswelle während einem Getriebestufenwechsel zur Verfügung zu stellen sowie ein Verfahren zur Steuerung des Antriebes, insbesondere für elektrische Fahrzeugantriebe.

### Lösung der Aufgabe

Diese Aufgabe wird durch den elektrischen Antrieb mit den Merkmalen des Anspruchs 1 und durch Vorsehung des Verfahrens gemäß Anspruch 11 gelöst.

Es handelt sich hierbei um einen Antrieb mit mindestens zwei E-Maschinen und mindestens zwei Teilgetrieben zur Übertragung der Drehmomente auf eine gemeinsame Ausgangswelle. Mindestens eines der Teilgetriebe ist als ein AMT oder an einem AMT (Automated Manual Transmission) orientiertes Getriebe ausgeführt. Das heißt, es handelt sich in der Ausführung um einen Stirnradsatz in Vorgelegebauweise bei dem Getriebestufenwechsel mit Schaltelementen ausgeführt werden, die keine Lastschaltung erlauben. Lastschaltungen des Gesamtgetriebes und eine unterbrechungsfreie Drehmomentabgabe der Ausgangswelle werden durch eine entsprechende Schaltstrategie im Zusammenspiel der Teilgetriebe ermöglicht.

Vorteile dieses Antriebes sind ein übergangsloser Verlauf des Drehmoments während eines Getriebestufenwechsels, ein hohes Drehmoment bei niedriger Drehzahl, ein verbesserter Wirkungsgrad im Teillastbereich, ein hohes zur Verfügung stehendes Drehzahlkollektiv (hohe maximale Drehzahl) und damit eine kleinere Bauweise der E-Maschinen und ein geringeres Gewicht. Ein weiterer Vorteil besteht darin, dass im Getriebe keine Lastschaltkupplungen benötigt werden.

Ein solcher elektrischer Antrieb nach Anspruch 1 kann in Modulbauweise mehrfach über Getriebe nach Anspruch 1 verbunden werden (nicht zeichnerisch dargestellt). Ein Ausführungsbeispiel ist der parallele Aufbau von mindestens zwei elektrischen Antrieben nach Anspruch 1, deren Ausgangswellen als Eingangswellen für ein Getriebe nach Anspruch 1 dienen und vielfache dieser Kombination.

Vorteilhafte Ausführungsbeispiele werden im Folgenden beschrieben und / oder sind in den Unteransprüchen beschrieben.

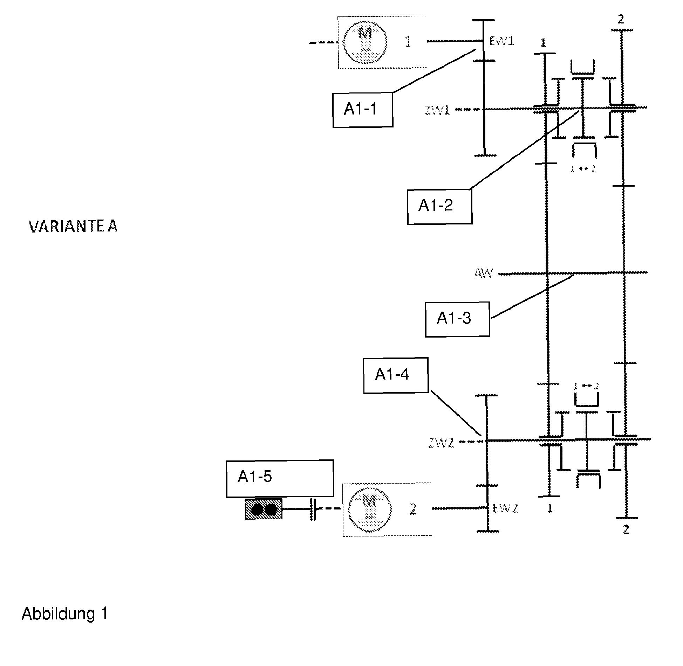

Es zeigen: Abbildung 1: Variante A des Antriebes

Zwei Eingangswellen (EW), die mit elektrischen Maschinen verbunden sind, treiben zwei Teilgetriebe mit Zwischenwellen (ZW) an, die mit einer Ausgangswelle verbunden sind. Variante A zeigt zusätzlich einen Range Extender (RE), der über eine Kupplung oder einen Freilauf an eine der Eingangswellen oder bei mehrstufigen Getrieben an eine der Zwischenwellen angekoppelt werden kann. Der Range Extender kann sowohl vom Abtrieb mechanisch entkoppelt (serieller Hybrid) als auch an den Abtrieb mechanisch angekoppelt (paralleler Hybrid) betrieben werden.

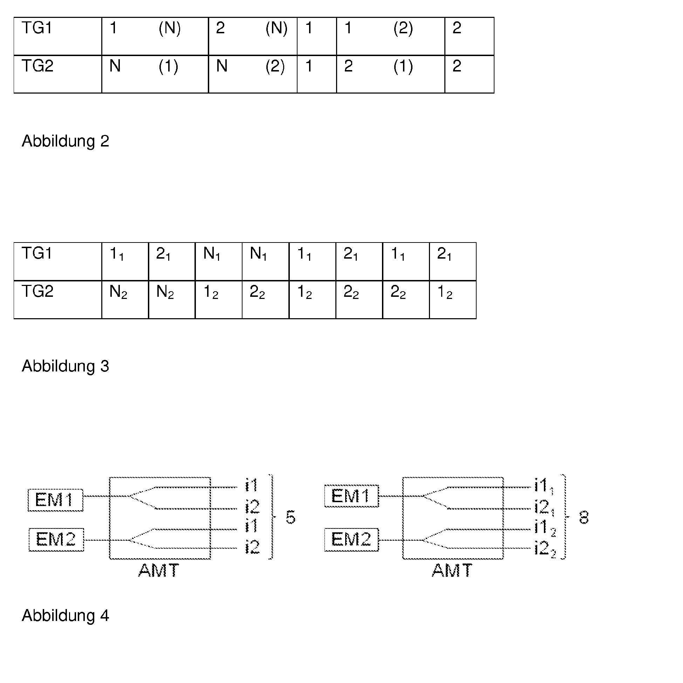

In dieser Variante hat jedes Teilgetriebe (TG) zwei Übersetzungsstufen. Sind diese identisch ausgelegt und auch die beiden Antriebe identisch, so dass viele Gleichteile verwendet werden können, so ergeben sich bei konstanten und gleichen Geschwindigkeiten an den Eingangswellen fünf verschiedene Konfigurationen (Abbildung 2). Die dabei jeweils eingelegten Getriebestufen der Teilgetriebe sind in Abbildung 2 dargestellt (N: Leerlauf). Die Werte in Klammern bedeuten einen äquivalenten Betrieb zu den Werten, die nicht in Klammern stehen.

Durch Variation der Übersetzungen in den beiden zweistufigen Getrieben und / oder der Antriebe lassen sich für den stationären Bereich (konstante Geschwindigkeit der Antriebe) acht verschiedene Betriebskonfigurationen realisieren. Der Unterschied ist nun, dass z.B. 1₁/N₂ nicht mehr äquivalent zu N₁/1₂ ist (Abbildung 3).

Abbildung 4 zeigt den schematischen Aufbau des Antriebes mit gleichen Übersetzungen und fünf Betriebskonfigurationen (links) oder unterschiedlichen Übersetzungen und acht Betriebskonfigurationen (rechts).

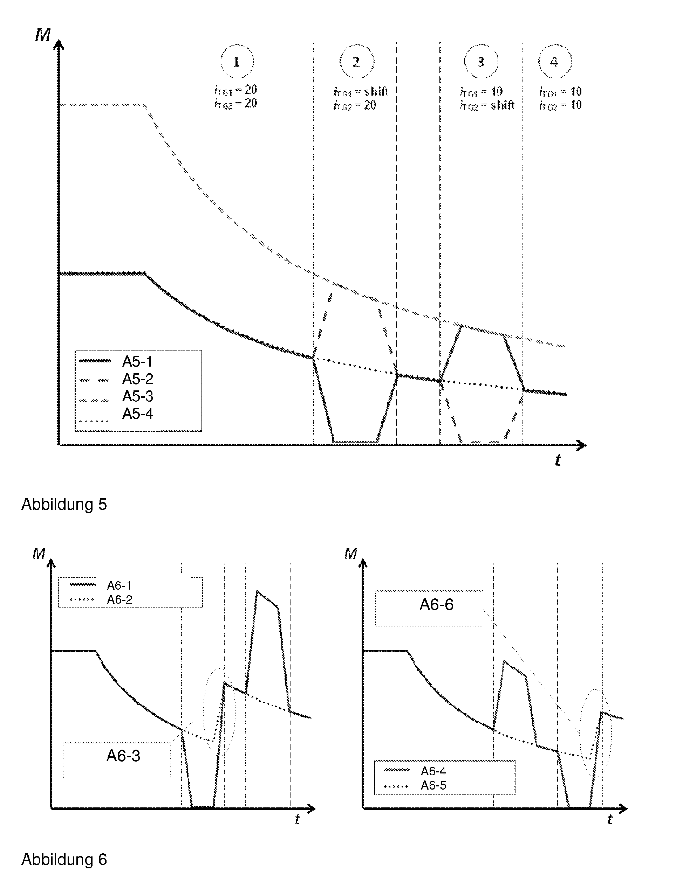

Abbildung 5 zeigt das Drehmoment an den beiden Eingängen und an der Ausgangswelle während eines Schaltvorganges. Zur unterbrechungsfreien Schaltung eines Teilgetriebes von einer Stufe auf eine andere wird dieses Teilgetriebe von der Ausgangswelle abgekoppelt. Zur Vorbereitung wird das Drehmoment des zweiten Antriebes langsam erhöht um den gesamten Antrieb zu übernehmen und das Drehmoment des Teilgetriebes, in dem ein Stufenwechsel vollzogen werden soll, wird gleichzeitig reduziert. D.h. die Ausgangswelle wird nur über einen Antrieb und ein Teilgetriebe angesteuert. Ist der Stufenwechsel erfolgt, wird das Drehmoment dieses Antriebes wieder erhöht und entsprechend das Drehmoment des zweiten Antriebes reduziert, so dass beide Teilgetriebe gleichmäßig belastet werden. Abbildung 6 zeigt die Verläufe der Drehmomente an den beiden E-Maschinen.

Um eine unterbrechungsfreie Drehmomentabgabe der Ausgangswelle zu ermöglichen, muss jeder Antrieb in der Lage sein kurzzeitig ein Drehmoment zu liefern, das doppelt so hoch ist wie das Drehmoment, das geliefert wird, wenn beide Antriebe zum Ansteuern der Ausgangswelle beitragen.

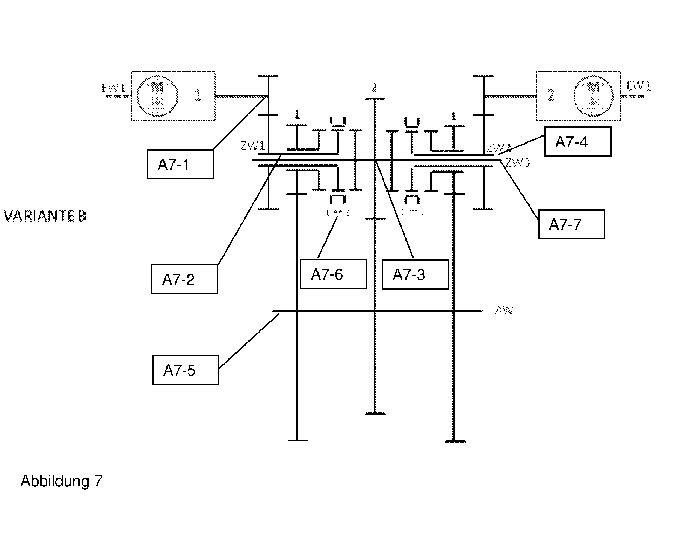

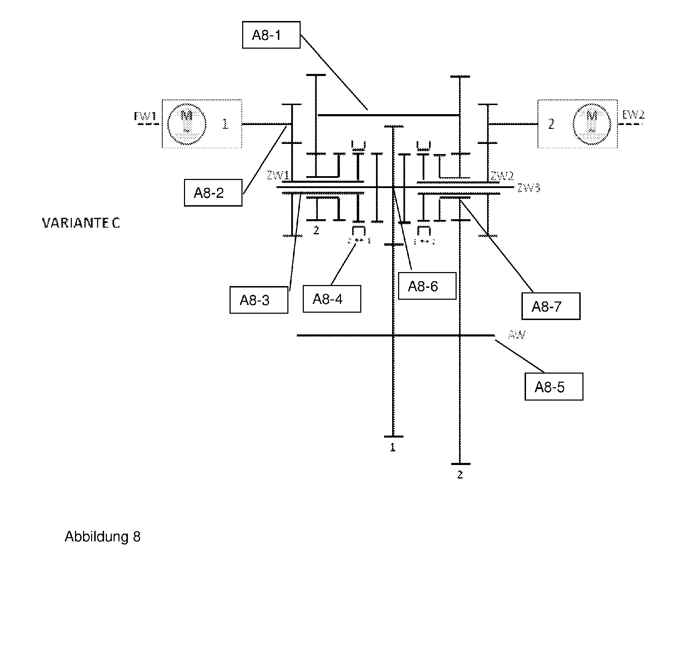

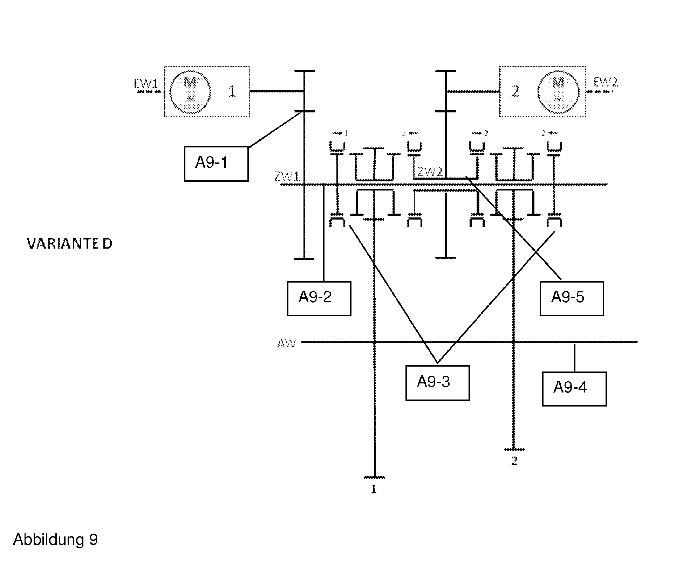

Abbildung 7 zeigt Variante B des Getriebes, bei der die beiden Antriebe eine Übersetzung über eine gemeinsame Zwischenwelle ansteuern. Abbildung 8 zeigt eine Variante C, bei der zusätzlich noch eine weitere Welle die beiden Teilgetriebe verbindet. Abbildung 9 zeigt eine Variante D, bei der die beiden Antriebe jeweils beide Übersetzungen über gemeinsame Zwischenwellen ansteuern.

### Rein elektrischer Antrieb

Im instationären Betrieb der Antriebe, z.B. während der Beschleunigung, kann der Überlastbereich der E- Maschinen genutzt werden, um zugkraftunterbrechungsfrei schalten zu können. Zu Beginn eines in Abbildung 4 prinzipiell dargestellten Hochschaltvorgangs werden beide Teilgetriebe in Gang 1 mit Nenndrehmoment Mₙₑₙₙ betrieben (Abbildung 5 - Bereich 1). Das Drehmoment an der Ausgangswelle ist gleich der Summe der Drehmomente der beiden Teilgetriebe. Zur Vorbereitung des ersten Gangwechsels in Teilgetriebe 1 (TG1) wird das Drehmoment dort auf null reduziert, während gleichzeitig das Drehmoment des Antriebes an Teilgetriebe 2 (TG2) verdoppelt wird. Daraus resultiert ein an der Ausgangswelle übergangsloser Verlauf des Drehmoments. In dieser Zeit erfolgt im lastlosen TG1 ein Gangwechsel von Gang 1 in Gang 2 (Abbildung 5 - Bereich 2). Nachfolgend werden beide E-Maschinen wieder auf Nenndrehmoment überführt (in Abbildung 5 wird davon ausgegangen, dass die E-Maschine an TG2 im Feldschwächebereich also mit konstanter Leistung betrieben wird und sich das Nenndrehmoment durch die Drehzahlreduzierung entsprechend erhöht), woraus wiederum ein übergangsloser Verlauf des Drehmoments an der Ausgangswelle resultiert. In Analogie erfolgt die Vorbereitung und Durchführung des Gangwechsels in TG2 von Gang 1 auf Gang 2 (Abbildung 5 - Bereich 3) ebenfalls ohne Änderung des Drehmoments an der Ausgangswelle, so dass abschließend beide Teilgetriebe in Gang 2 betrieben werden (Abbildung 5 - Bereich 4).

Für Schaltungen, bei denen ein Überlastbetrieb bereits vor dem Gangwechsel erfolgt, ist anzumerken, dass ein völlig übergangsloser Schaltvorgang nur möglich ist, wenn das Drehmoment jeder E-Maschine zumindest kurzzeitig noch um den Faktor 2 gesteigert werden kann. Werden die E-Maschinen darüber hinaus nicht wie in Abbildung 5 angenommen während des Schaltvorganges durchgehend im Feldschwächebereich betrieben, ergibt sich eine Leistungsreduzierung bzw. Verringerung des Drehmoments an der Ausgangswelle durch die Schaltvorgänge. Wie bei volllastschaltbaren Automaten in konventionellen Antrieben mit Verbrennungsmotoren, erlaubt die Erfindung auch hier eine überganglose Überführung des Drehmoments während der Schaltvorgänge. Der gesamte Schaltablauf ist ähnlich dem Prinzip eines Doppelkupplungsgetriebes. Es findet eine Momentenüberblendung vom einen auf das andere Teilgetriebe statt, wobei hierzu aber keine Kupplungen benötigt werden. Erfolgt der aktuelle Fahrbetrieb z.B. im Teillastbereich lediglich über einen Teilstrang, so kann im lastlosen zweiten Teilstrang ein Gang vorgewählt werden und das Drehmoment überganglos von der einen auf die andere E-Maschine überblendet werden. Werden beide Teilstränge zur Drehmomentübertragung genutzt, übernimmt ein Teilstrang durch Drehmomenterhöhung kurzzeitig die gesamte Antriebsleistung und ermöglicht somit einen Gangwechsel im zweiten, dann lastlosen Teilstrang. Ist dieser Gangwechsel erfolgt, wird das Drehmoment am zweiten Teilstrang wieder aufgebaut und dabei im gleichen Maße die Drehmomenterhöhung am ersten Teilstrang reduziert.

Die Nutzung des Überlastbereiches der E-Maschinen zum Schalten des Getriebes muss in der Betriebsstrategie berücksichtigt werden. D.h. je nach Schaltstrategie (z.B. Anzahl der Schaltungen/Zeit oder Schaltdauer) und Kennwerten der E-Maschinen (z.B. Erwärmungs- oder Abkühlungs-Zeitkonstante) ist das Nenndrehmoment der E-Maschinen so festzulegen, dass bei jeder Schaltung eine Momentenerhöhung zumindest auf 2*Mₙₑₙₙ möglich ist. Mit dieser Strategie ist eine Überhitzung der E-Maschinen auszuschließen.

Ein Ausführungsbeispiel (nicht zeichnerisch dargestellt) ist, dass jeweils nur ein Teilstrang bestehend aus einer E-Maschine und einem Teilgetriebe (TG1 oder TG2) die Ausgangswelle antreibt und zur Vorbereitung auf einen Schaltvorgang der Gang am nicht antreibenden Teilgetriebe (TG2 oder TG1) eingelegt wird und danach dieser Teilstrang (mit TG2 oder TG1) den Antrieb übernimmt. Hierzu wird das Drehmoment an TG1 oder TG2 bis auf null reduziert und das Drehmoment an TG2 oder TG1 aufgebaut.

Ein weiteres Ausführungsbeispiel (nicht zeichnerisch dargestellt) ist, dass ein Teilstrang als Hauptantrieb dient und für Dauerantrieb ausgelegt ist und der zweite Teilstrang so ausgelegt ist, dass dieser für kurzzeitigen Antrieb der Ausgangswelle, während eines Schaltvorganges im Teilgetriebe 1, optimiert ist. Ist Teilstrang 1 der Hauptantriebsstrang, so wird zur Vorbereitung eines Schaltvorganges im Hauptantriebsstrang ein angemessener Gang im Teilgetriebe 2 eingelegt und das Drehmoment an diesem aufgebaut und gleichzeitig das Drehmoment am Hauptantriebsstrang bis auf null reduziert. Nun wird der gewünschte Gang im Hauptantriebsstrang eingelegt und danach das Drehmoment an diesem wiederum aufgebaut und gleichzeitig das Drehmoment an Teilgetriebe 2 bis auf null reduziert.

### Range Extender Betrieb

Der Range Extender als Kraftmaschine kann an vier verschiedenen Stellen innerhalb des in Abbildung 1 dargestellten Antriebes integriert werden. Der RE kann an EW1, ZW1, EW2 oder ZW2 gekoppelt werden. Wo er integriert wird liegt zum einen an der Auslegung des Getriebes und zum anderen an den Leistungsdaten von EM und RE. Bei ähnlichem Betriebsdrehzahlbereich ist eine Ankopplung an EW sinnvoll, bei höherer Drehzahl der EM macht eine Anbindung an eine der Zwischenwellen Sinn.

Während des seriellen Hybridbetriebes dient eine EM zum Antrieb der Räder und die andere EM arbeitet als Generator. Somit ist ein Schaltvorgang in diesem Betrieb mit einer Zugkraftunterbrechung verbunden oder bedarf eines Mischbetriebes (siehe unten).

### Mechanischer Antrieb durch RE

Mit einer Kraftmaschine (KM) als Range Extender kann diese ebenfalls direkt als mechanisch angekoppelter Antrieb der Räder dienen. D.h. neben der Funktion als serieller Hybrid ist ebenfalls die Funktion als paralleler Hybrid möglich. In diesem Fall kann die KM mit denselben Übersetzungen betrieben werden wie das Teilsystem, an das sie angekoppelt ist. Darüber hinaus kann die EM des anderen Teilsystems zum Boosten und zum zugkraftunterbrechungsfreien Schalten verwendet werden.

### Mischbetrieb

Der Mischbetrieb besteht aus zwei Betriebsmöglichkeiten. So kann zum einen die KM die Räder direkt antreiben und gleichzeitig arbeitet die EM desselben Teilsystems als Motor oder Generator (Lastpunktverschiebung oder Laden des elektrischen Energiespeichers). Die zweite E-Maschine kann wiederum als zusätzlicher Antrieb (Boosten) oder zum Schalten verwendet werden.

Eine zweite Möglichkeit des Mischbetriebs bietet die bereits erwähnte Unterstützung der Schaltungen im Range Extender Betrieb. Während das zum Antrieb verwendete Teilsystem einen Gangwechsel durchführt, könnte das Teilsystem mit Range Extender dazu dienen, das Drehmoment aufrecht zu erhalten.

### Beschriftung der Zeichnungen

Abbildung 1: Getriebe Variante A (ohne abgebildetes Differenzial)
   EW: Eingangswelle
   ZW: Zwischenwelle
   AW: Ausgangswelle
   A1-1: Welle von E-Maschine zu Getriebe mit Stirnrad für konstante Übersetzung
   A1-2: Zwischenwelle in Getriebe mit zwei Übersetzungen über Schaltmuffe schaltbar
   A1-3: Ausgangswelle des Getriebes, hier folgt ein Differenzial
   A1-4: Getriebepfad zwei ist vom Aufbau her identisch
   A1-5: Range Extender z.B. mit Kupplung
Abbildung 2: Fünf Konfiguration bei zwei gleichen Antrieben und Teilgetrieben
Abbildung 3: Acht Konfiguration bei zwei ungleichen Antrieben und / oder Teilgetrieben
Abbildung 4: Schematischer Aufbau des Antriebes mit gleichen Übersetzungen und fünf Betriebskonfigurationen (links) oder unterschiedlichen Übersetzungen und acht Betriebskonfigurationen (rechts)
Abbildung 5: Beispiel eines Schaltvorganges. Die Getriebeübersetzungen sind beispielhaft i₁=20 für Gang 1 und i₂=10 für den Gang 2 sowohl für TG1 als auch für TG2. Der Verlauf der Ausgangswelle ist das resultierende Moment beider Motoren am Getriebeausgang (TG1 + TG2). Mₙₑₙₙ * i ist das Ausgangsdrehmoment an jedem teilgetriebe (TG) jeweils bei Nenndrehmomnet der zugeteilten E-Maschine.
   A5-1: Teilgetriebe 1
   A5-2: Teilgetriebe 2
   A5-3: Ausgangswelle
   A5-4: Mₙₑₙₙ * i
Abbildung 6: Verläufe der Drehmomente der E-Maschinen EM1 (links) und EM2 (rechts) der Teilgetriebe TG1 und TG2 passend zu dem Beschleunigungsverlauf in Abbildung 5. Nach dem Gangwechsel erhöht sich das Nenndrehmoment der E-Maschinen auf Grund der Drehzahlreduzierung.
   A6-1: Drehmoment EM1
   A6-2: Nenndrehmoment EM1
   A6-3: Drehzahlreduzierung durch Gangwechsel
   A6-4: Drehmoment EM2
   A6-5: Nenndrehmoment EM2
   A6-6: Drehzahlreduzierung durch Gangwechsel
Abbildung 7: Getriebe Variante B (ohne abgebildetes Differenzial)
   EW: Eingangswelle
   ZW: Zwischenwelle
   AW: Ausgangswelle
   A7-1: Welle von E-Maschine zu Getriebe mit Stirnrad für konstante Übersetzung
   A7-2: Zwischenwelle als Hohlwelle mit Übersetzungsstufe 1 für Getriebeseite 1
   A7-3: Zwischenwelle als Vollwelle mit Übersetzungsstufe 2 für Getriebeseite 1 und 2
   A7-4: Getriebepfad zwei ist vom Aufbau her identisch
   A7-5: Ausgangswelle des Getriebes, hier folgt ein Differenzial
   A7-6: Schaltmuffe verbindet entweder Hohlwelle mit Übersetzung 1 oder Vollwelle mit Übersetzung 2
   A7-7: Zwischenwelle 3
Abbildung 8: Getriebe Variante C (ohne abgebildetes Differenzial)
   EW: Eingangswelle
   ZW: Zwischenwelle
   AW: Ausgangswelle
   A8-1: Verbindungswelle zwischen Getriebeseite 1 und 2
   A8-2: Welle von E-Maschine zu Getriebe mit Stirnrad für konstante Übersetzung
   A8-3: Zwischenwelle als Hohlwelle mit Übersetzungsstufe 2. Übersetzungsstufe 2 ist über Verbindungswelle oben mit Getriebeseite 2 verbunden.
   A8-4: Schaltmuffe verbindet entweder Hohlwelle mit Übersetzung 2 oder Vollwelle mit Übersetzung 1
   A8-5: Ausgangswelle des Getriebes, hier folgt ein Differenzial
   A8-6: Zwischenwelle als Vollwelle mit Übersetzungsstufe 1 für Getriebeseite 1 und 2
   A8-7: Schaltmuffe verbindet entweder Hohlwelle mit Übersetzung 1 oder Vollwelle mit Übersetzung 2
Abbildung 9: Getriebe Variante D (ohne abgebildetes Differenzial)
   EW: Eingangswelle
   ZW: Zwischenwelle
   AW: Ausgangswelle
   A9-1: Welle von E-Maschine zu Getriebe mit Stirnrad für konstante Übersetzung
   A9-2: Eine gemeinsame Zwischenwelle für Getriebeseite 1 und Getriebeseite 2
   A9-3: Schaltmuffen für Getriebeseite 1, links um Übersetzungsstufe 1 einzulegen, rechts für Übersetzungsstufe 2
   A9-4: Ausgangswelle des Getriebes, hier folgt ein Differenzial
   A9-5: Getriebeseite 2 ist auf einer Hohlwelle als Zwischenwelle. Wie auf Getriebeseite 1 dient jeweils eine Schaltmuffe pro Gang.

## Patentansprüche

1. Ein elektrischer Antrieb zur Übertragung der Drehmomente von mindestens zwei elektrischen Antriebsmitteln über ein Getriebe auf eine Ausgangswelle, wobei das Getriebe pro Antriebsmittel ein Teilgetriebe aufweist und jedes Teilgetriebe über einen entsprechenden Eingangskanal mit dem entsprechenden Antriebsmittel gekoppelt ist, wobei die Teilgetriebe untereinander und mit der gemeinsamen Ausgangswelle so miteinander wechselwirkend ausgeführt und angeordnet sind, dass bei Schaltvorgängen des einen oder anderen Teilgetriebes Unterbrechungen der Drehmomentabgabe der Ausgangswelle vermieden werden.

2. Elektrischer Antrieb nach Anspruch 1 **dadurch gekennzeichnet, dass** mindestens eines der Teilgetriebe als ein AMT Getriebe oder an einem AMT orientiertes Getriebe ausgeführt sind, aufweisend einen Stirnradsatz in Vorgelegebauweise bei dem Getriebestufenwechsel mit Schaltelementen ausgeführt werden, die keine Lastschaltung erlauben.

3. Elektrischer Antrieb nach Anspruch 1 bis 2 **dadurch gekennzeichnet, dass** die Teilgetriebe identisch ausgelegt sind.

4. Elektrischer Antrieb nach Anspruch 1 bis 3 **dadurch gekennzeichnet, dass** mindestens zwei parallel geschaltete Antriebe nach Anspruch 1 über mindestens ein Getriebe nach Anspruch 1 auf eine Ausgangswelle gekoppelt sind.

5. Ein Fahrzeug aufweisend mindestens ein angetriebenes Rad **dadurch gekennzeichnet, dass** das Fahrzeug einen elektrischen Antrieb gemäß einem der Ansprüche 1 bis 4 zum Antrieb des Rads über die gemeinsame Ausgangswelle aufweist.

6. Fahrzeug nach Anspruch 5 **dadurch gekennzeichnet, dass** mindestens eine Energiequelle im Fahrzeug vorgesehen ist.

7. Fahrzeug nach Anspruch 5 bis 6 **dadurch gekennzeichnet, dass** der Antrieb ferner mindestens einen Range Extender (RE), besonders bevorzugt in Form einer Wärmekraftmaschine ausgeführt, aufweist, wobei der mindestens eine Range Extender (RE) an eines der Teilgetriebe oder je ein RE zu jedem Teilgetriebe zugeordnet vorgesehen ist und entweder an eine der Zwischenwellen oder eine der Eingangswellen angekoppelt ausgeführt ist.

8. Fahrzeug nach Anspruch 5 bis 7, **dadurch gekennzeichnet, dass** als Range Extender eine Kraftmaschine verwendet wird, so dass der Antrieb sowohl als serieller als auch als paralleler Hybrid betreibbar ist.

9. Fahrzeug nach Anspruch 5 bis 8, **dadurch gekennzeichnet, dass** der Range Extender als mechanisch angekoppeltes Antriebselement für die Realisierung von Lastschaltungen ausgeführt ist.

10. Fahrzeug nach Anspruch 5 bis 9, **dadurch gekennzeichnet, dass** das Fahrzeug zwei angetriebene Achsen aufweist, wobei jede Achse von einem elektrischen Antrieb gemäß Anspruch 1 bis 4 angetrieben ausgeführt ist oder die eine oder die andere Achse über eine Wärmekraftmachine angetrieben ausgelegt ist oder die beiden parallel geschalteten Antriebe aus den Ansprüchen 1 bis 4 auf jeweils die eine bzw. die andere Achse und damit gemeinsamen Ausgangskanal wirken.

11. Verfahren zur Vermeidung von Unterbrechungen der Drehmomentabgabe der
Ausgangswelle bei einem elektrischen Antrieb gemäß Anspruch 1 bis 4 während eines Schaltvorganges aufweisend folgende Schritte:
a) Das Drehmoment in Teilgetriebe 1 oder 2 wird auf null reduziert, während gleichzeitig das Drehmoment an Teilgetriebe 2 oder 1 erhöht wird, so dass das Drehmoment an der Ausgangswelle durchgehend gleich bleibt.
b) Nachdem das Drehmoment in Teilgetriebe 1 oder 2 null ist, erfolgt im lastlosen Teilgetriebe 1 oder 2 ein Schaltvorgang zwischen den Getriebestufen.
c) Ist der Schaltvorgang abgeschlossen wird das Drehmoment in Teilgetriebe 1 oder 2 wieder erhöht und entsprechend das Drehmoment im Teilgetriebe 2 oder 1 reduziert.

12. Verfahren nach Anspruch 11, **dadurch gekennzeichnet, dass** das Drehmoment im Teilgetriebe 2 oder 1 in Anspruch 11 c) auf null reduziert wird.

13. Verfahren nach Anspruch 11 bis 12, **dadurch gekennzeichnet, dass** Teilgetriebe 1 oder 2 bereits lastlos ist und damit die Aktion in Anspruch 10 a) entfällt und das Drehmoment in Anspruch 10 c) in Teilgetriebe 1 oder 2 erhöht und entsprechend das Drehmoment im Teilgetriebe 2 oder 1 auf null reduziert wird.

14. Verfahren nach Anspruch 11 bis 13, **dadurch gekennzeichnet, dass** ein Teilantriebsstrange bestehend aus einem Antriebsmittel und einem Teilgetriebe als Hauptantriebsstrang ausgelegt ist und der zweite Teilantriebsstrang nur während Schaltvorgängen im Hauptantriebsstrang die Ausgangswelle antreibt.
